# FASCICULE DE BREVET EUROPEEN

(11) **EP 0 893 408 B1**
(45) Date de publication et mention de la délivrance du brevet: **07.11.2001**
(21) Numéro de dépôt: 98420123.6
(22) Date de dépôt: 20.07.1998
(51) Int. Cl.: C01B 33/02, C07F 7/16

(54) **Procédé de fabrication de poudre de silicium active pour la préparation des alkyl- ou aryl-halogénosilanes**
Verfahren zur Herstellung aktiven Siliziumpulvers für die Herstellung von Alkyl- oder Aryl-Halogensilanen
Process for manufacturing active silicon powder for the preparation of alkyl or aryle halogenosilanes

(30) Priorité: 24.07.1997 FR 9709674
(43) Date de publication de la demande: 27.01.1999
(73) Titulaire: PECHINEY ELECTROMETALLURGIE, 92400 Courbevoie (FR)
(72) Inventeur: Margaria, Thomas, 74190 Passy (FR); Meoni, Florence, 74700 Sallanches (FR)
(74) Mandataire: Mougeot, Jean-Claude

(56) Documents cités:
- EP-A- 0 494 837
- DE-A- 1 668 831
- FR-A- 1 519 715
- US-A- 4 602 101
- US-A- 5 596 119
- US-A- 5 618 960
- DATABASE WPI Section Ch, Week 8816 Derwent Publications Ltd., London, GB; Class E36, AN 88-107769 XP002062975 & JP 63 055111 A (MITSUBISHI METAL CORP) , 9 mars 1988

## Description

L'invention concerne un procédé de fabrication de poudre de silicium, de granulométrie inférieure à 350 µm, présentant des propriétés catalytiques pour la fabrication des alkyl- ou aryl-halogénosilanes, destinés à la synthèse des silicones.

### Etat de la technique

La synthèse des alkyl- ou aryl-halogénosilanes par réaction entre 250 et 350°C d'un hydrocarbure halogéné, par exemple le chlorure de méthyl, sur le silicium, en présence de cuivre, est connue depuis le brevet US 2380995 délivré en 1945 à E.G. ROCHOW.

Cette réaction a atteint un développement industriel important, puisqu'elle est à la base de l'industrie des silicones. Elle se pratique le plus souvent avec CH₃Cl, et conduit à un mélange de différents méthylchlorosilanes en proportions variables.

Le rôle du cuivre dans la réaction a été décrit par exemple dans l'article de P. TRAMBOUZE « Contribution à l'étude du mécanisme de la synthèse des méthylchlorosilanes » Bulletin de la Société Chimique de France, n° 288, 1956, pp. 1756-1765, et dans celui de G.H. KOLSTER « The η' and ε' phase of the system copper-silicon as solid reactants in the synthesis of dimethyl-dichlorosilane » Recueil des Travaux de Chimie, voL 83, 1964, pp. 737-751. Ces travaux montrent le rôle catalytique de la phase Cu₃Si dans la réaction de chlorométhylation.

Le brevet FR 2720385 de la demanderesse montre toutefois que, lorsqu'on introduit des quantités croissantes de cuivre dans le silicium, d'autres phases telles que Cu₄SiAl, Cu₂Si₃Al ou Cu₂Si₃Ca, apparaissent avant Cu₃Si, ce qui oblige à ajouter du cuivre en quantité sensiblement supérieure à celle engagée dans la phase active Cu₃Si.

Ainsi, seule une fraction du cuivre ajouté est valorisée.

Le brevet européen n° 0604092 de Dow Corning décrit la préparation d'alliage silicium-cuivre contenant de 0,01 à 9% de cuivre, pour la préparation des halogénosilanes et préconise qu'une partie du cuivre seulement soit apportée par l'alliage, le reste étant apporté de la manière habituelle par un composé de cuivre mélangé à la masse de contact.

Le brevet européen n° 0028009 d'Union Carbide propose de placer le cuivre à la surface des particules de silicium par mélange de poudres des deux composants et chauffage vers 1000°C sous atmosphère d'hydrogène.

En plus du cuivre, d'autres éléments ont été reconnus comme ayant une action favorable sur la vitesse ou la sélectivité de la réaction de ROCHOW. Ainsi, le brevet US 2666776 de Wacker Chemie préconise l'addition au silicium et au cuivre de la masse de contact d'un métal des Sème ou 8ème groupes de la classification périodique, en particulier le fer, le nickel, le cobalt ou le phosphore.

Le brevet DE 1165026 de Th. Goldschmidt décrit l'utilisation de silicium dopé au phosphore, à l'arsenic, à l'antimoine, au bismuth, à l'indium, au thallium et/ou au gallium. Les brevets US 4500724 de General Electric et EP 0191502 d'Union Carbide concernent l'emploi, dans la masse de contact, d'un mélange cuivre-zinc-étain dans des proportions définies.

Le brevet US 4602101 de Dow Corning propose d'ajouter à la masse de contact de 25 à 2500 ppm de phosphore, sous forme de phosphore élémentaire ou de composés tels que des phospures. Les brevets EP 0272860 et 0273635 de la même société préconisent l'addition de phosphore, soit par l'intermédiaire des matières premières utilisées dans la fabrication du silicium par carbothermie au four électrique à arc, soit par addition dans la poche de raffinage.

Le brevet européen n° 0494837 de la demanderesse décrit une poudre de silicium métallurgique à faible oxydation superficielle, présentant une couche superficielle de silice inférieure à 2 nm et obtenue notamment par broyage sous atmosphère peu réactive en présence d'une huile. Ce silicium permet d'améliorer notablement la vitesse de la réaction de chlorométhylation.

Dans le domaine des techniques de broyage, la demande de brevet japonais n° 63-055111 de Mitsubishi Metal décrit le broyage du silicium dans un broyeur à boulets avec addition de 0,1 à 20% d'un composé du cuivre, par exemple un chlorure ou un oxyde cuivreux ou cuivrique; dans le but d'éviter le collage du silicium sur les parois du broyeur.

### Objet de l'invention

L'invention a pour but de préparer un silicium métallurgique incorporant un ou plusieurs éléments catalyseurs ou promoteurs de la réaction de ROCHOW sous une forme qui le rende plus réactif que les produits de l'art antérieur et qui permette ainsi d'améliorer à la fois le rendement de la réaction, sa sélectivité, c'est-à-dire le taux de dichloro-diméthylsilane dans les produits de la réaction, ainsi que la vitesse de démarrage de la réaction.

L'invention a pour objet un procédé de préparation de poudre de silicium destinée à la réaction de ROCHOW consistant à broyer du silicium métallurgique, contenant plus de 98% (en poids) de silicium, du fer jusqu'à 0,4%, de l'aluminium jusqu'à 0,2% et du calcium jusqu'à 0,2%, à une granulométrie inférieure à 350 µm, en présence d'un au moins des catalyseurs et/ou promoteurs de la réaction, de manière à déposer ce ou ces élément(s) à la surface des grains.

Le cuivre à la surface des grains est, de préférence, en quantité comprise entre 0,01 et 0,1 g par m² de surface des grains (soit 0,016 à 0,16% en poids). l'étain en quantité comprise entre 0,003 et 0,03 g/m² de surface des grains (soit 0,005 à 0,05% en poids), et.le phosphore en quantité comprise entre 0,003 et 0,03 g/m² (soit 0,005 à 0,05% en poids)

La poudre de silicium selon l'invention est, de préférence, une poudre à faible oxydation superficielle avec une couche de silice inférieure à 2 nm, selon le brevet européen 0494837 mentionné ci-dessus.

### Description de l'invention

L'invention repose sur la constatation, par les inventeurs, d'une action catalytique améliorée lorsque le catalyseur et/ou le promoteur se trouve fixé à la surface des grains de silicium au moment où cette surface est générée, c'est-à-dire au moment du broyage de la poudre.

Le silicium métallurgique est préparé au four de réduction à arc et il est coulé, à partir de l'état liquide à une température comprise entre 1600 et 1800°C, soit en lingotière, les lingots obtenus étant ensuite concassés en morceaux de moins de 120 mm et rebroyés jusqu'à 20 mm, soit dans une cuve de granulation remplie d'eau. Dans ce cas, le matériau solide obtenu est un granulé de taille homogène de l'ordre de 10 mm.

Dans les deux cas, le matériau doit être broyé pour préparer une poudre de granulométrie inférieure à 350 µm. Le broyage est effectué dans un broyeur à barres ou à boulets permettant le maintien d'une atmosphère contrôlée, de préférence une atmosphère enrichie en azote et contenant moins de 8% d'oxygène.

Le broyage s'effectue avec ajout d'une substance organique de nature à protéger la poudre de silicium de l'oxydation lors de la remise à l'air. A cette fin, on peut utiliser soit une huile de silicone, soit une huile minérale de type hydrocarbure, soit un ester, en proportion pondérale d'au plus 1%.

On peut apporter le cuivre nécessaire à la surface des grains de silicium en ajoutant dans le broyeur une faible quantité d'un composé de cuivre, tel qu'un oxyde et un chlorure. On peut le faire de manière plus simple en effectuant le broyage à l'aide de boulets ou de barres en cuivre ou en alliage cuivreux, dont l'usure apportera la quantité de cuivre nécessaire à la surface des grains de silicium.

Cette quantité doit être comprise entre 0,01 et 0,1 g par m² de surface des grains. On peut fixer également de l'étain en quantité comprise entre 0,003 et 0,03 g/m², par des moyens similaires, c'est-à-dire par broyage avec addition d'un composé d'étain (oxyde ou chlorure) ou en utilisant des barres ou boulets en alliage contenant de l'étain, par exemple du bronze, qui permet de déposer simultanément le cuivre et l'étain.

Le phosphore peut être déposé, en quantité comprise entre 0,003 et 0,03 g/m², par broyage en présence d'un composé non volatil et pas trop oxydant, comme par exemple le ferrophosphore, ou en utilisant des barres ou boulets de broyeur en bronze phosphoreux, ou tout autre alliage cuivreux contenant du phosphore.

Les quantités fixées sont contrôlées par exemple par spectroscopie d'électrons Auger, qui permet d'analyser une couche superficielle de quelques nanomètres. L'échantillon sur lequel on veut déterminer la composition superficielle est soumis à des analyses successives par spectroscopie Auger au cours d'un décapage ionique qui élimine progressivement la couche superficielle du produit. On obtient ainsi, en connaissant la vitesse d'érosion, un profil de concentration en oxygène, cuivre, étain, phosphore ou autre élément. La vitesse d'érosion est déterminée par la mesure de la profondeur du cratère final (« talystep ») ou à la suite d'un étalonnage par mesure d'un profil de concentration parfaitement connu d'isotope O₁₅ obtenu par implantation.

En ajoutant au broyage une substance organique telle qu'une huile de silicone, un hydrocarbure ou un ester, en quantité maximale de 1% en poids, et en maintenant dans le broyeur une atmosphère appauvrie en oxygène, on obtient des grains de silicium présentant une couche superficielle de silice d'épaisseur inférieure à 2 nm, conformément à l'enseignement du brevet EP 0494837 mentionné ci-dessus.

Une telle poudre de silicium présente non seulement une réactivité et une sélectivité améliorées lors de la réaction de ROCHOW, mais également un temps d'incubation de la réaction plus court, ce qui permet une augmentation de la productivité, notamment lorsqu'on utilise un procédé discontinu (batch).

### Exemples

### Exemple 1

On prépare par fusion en four à induction un alliage Si-Cu à 13% en poids de cuivre.

L'alliage est coulé, solidifié, broyé et tamisé. La fraction 50 - 160 µm est prélevée pour les essais ultérieurs. Dans du silicium métallurgique liquide prélevé sur la production d'une poche de coulée industrielle, on effectue une addition de cuivre, pour obtenir un alliage de composition suivante (en poids):

Cu = 3,31% Al = 0,193% Ca = 0,115% Fe = 0,36%

L'alliage est broyé de manière conventionnelle en poudre de granulométrie comprise entre 50 et 350 µm et on mesure une épaisseur de la couche superficielle de silice de l'ordre de 4 nm.

On mélange 40 g de cette poudre avec 2,5 g d'alliage Si-Cu et on effectue sur le mélange obtenu un test de chlorométhylation. Ce test consiste à placer la poudre de mélange, additionnée de 0,05 g de ZnO, dans un réacteur en verre de diamétre 30 mm muni d'un agitateur. On envoie un courant de CH₃Cl gazeux au travers d'un disque en verre fritté supportant la poudre. Le débit de gaz est maintenu constant à 3,6 10⁻³ m³/h. Après chauffage du milieu réactionnel et démarrage de la réaction, le système est maintenu à 300°C. Après 12 h de réaction, on note le débit moyen Q obtenu en diméthyldichlorosilane, ainsi que le taux α₂ de ce produit dans l'ensemble des produits de la réaction. La moyenne de 4 essais donne les valeurs suivantes:

Q = 8,0 g/h α₂=88%

On note également que le temps d'incubation nécessaire au démarrage de la réaction a été de 3 h 5 mn.

### Exemple 2

Partant de silicium métallurgique déjà concassé et broyé en morceaux de taille comprise entre 5 et 20 mm, on a effectué un broyage sous atmosphère contrôlée à moins de 5% d'oxygène, dans un broyeur à barres équipé pour la circonstance de barres en bronze à 18% d'étain. On a ajouté dans le broyeur de l'huile de silicone en quantité correspondant à 0,3% de la masse de silicium broyé.

La poudre obtenue a été tamisée pour garder la fraction comprise entre 50 et 350 µm. On a mesuré sur les grains une épaisseur de la couche de silice de 1,2 nm et, par spectroscopie Auger, une teneur superficielle en cuivre de 0,07 g/m² et une teneur superficielle en étain de 0,02 g/m².

Le même test de chlorométhylation que celui de l'exemple 1 a donné sur cette poudre les résultats suivants (moyenne de 4 essais):

Q = 8,9 g/h α₂ = 92% Temps d'incubation = 1 h 24 mn.

### Exemple 3

On opère comme dans l'exemple 2 en ajoutant en plus au broyage une quantité de ferrophosphore à 12% en poids de phosphore correspondant à 0,1% de la masse de silicium. On mesure par spectroscopie Auger une teneur superficielle en phosphore de 0,01 g/m².

Les résultats du test de chlorométhylation donnent:

Q = 9,0 g/h α₂ = 92,5% Temps d'incubation = 0 h 34 mn.

## Revendications

1. Procédé de préparation de poudre de silicium active destinée à la réaction de ROCHOW consistant à broyer du silicium métallurgique de composition (en poids) :
Si > 98% Fe < 0,4% Al < 0,2% Ca < 0,2%,
à une granulométrie inférieure à 350 µm, en présence d'au moins un catalyseur et/ou promoteur de la réaction, de manière à déposer ce (ou ces) élément(s) à la surface des grains.

2. Procédé selon la revendication 1, **caractérisé en ce que** du cuivre est déposé à la surface des grains en quantité comprise entre 0,01 et 0,1 g/m² de surface des grains.

3. Procédé selon la revendication 2, **caractérisé en ce qu'**on ajoute de l'oxyde ou du chlorure de cuivre lors du broyage du silicium.

4. Procédé selon la revendication 2, **caractérisé en ce que** le broyage est effectué dans un broyeur à barres ou à boulets, et que les barres ou les boulets sont en alliage cuivreux.

5. Procédé selon l'une des revendications 1 à 4, **caractérisé en ce que** de l'étain est déposé à la surface des grains en quantité comprise entre 0,003 et 0,03 g/m² de surface des grains.

6. Procédé selon la revendication 5, **caractérisé en ce qu'**on ajoute de l'oxyde ou du chlorure d'étain lors du broyage du silicium.

7. Procédé selon la revendication 5, **caractérisé en ce que** le broyage est effectué dans un broyeur à barres ou à boulets, et que les barres ou les boulets sont en bronze.

8. Procédé selon l'une des revendications 1 à 7, **caractérisé en ce que** du phosphore est déposé à la surface des grains en quantité comprise entre 0,003 et 0,03 g/m² de surface des grains.

9. Procédé selon la revendication 8, **caractérisé en ce qu'**on ajoute du ferrophosphore lors du broyage du silicium.

10. Procédé selon la revendication 8, **caractérisé en ce que** le broyage est effectué dans un broyeur à barres ou à boulets, et que les barres ou les boulets sont en bronze phosphoreux.

11. Poudre de silicium active pour la préparation des alkyl- ou aryl-halogénosilanes de composition (en poids) :
Si>98% Fe<0,4% Al<0,2% Ca < 0,2%,
de granulométrie inférieure à 350 µm, comportant du cuivre à la surface des grains en quantité comprise entre 0,01 et 0,1 g/m² de surface des grains.

12. Poudre de silicium active pour la préparation des alkyl- ou aryl-halogénosilanes de composition (en poids) :
Si>98% Fe<0,4% Al < 0,2% Ca < 0,2%,
de granulométrie inférieure à 350 µm, comportant de l'étain à la surface des grains en quantité comprise entre 0,003 et 0,03 g/m² de surface des grains.

13. Poudre de silicium active pour la préparation des alkyl- ou aryl-halogénosilanes, de composition (en poids) :
Si>98% Fe<0,4% Al <0,2% Ca < 0,2%,
de granulométrie inférieure à 350 µm, comportant du phosphore à la surface des grains en quantité comprise entre 0,003 et 0,03 g/m².de surface des grains.

14. Poudre de silicium selon l'une des revendications 11 à 13, **caractérisée en ce qu'**elle comporte à la surface des grains un ou plusieurs autres éléments catalyseurs et/ou promoteurs de la réaction de synthèse.

15. Poudre de silicium selon l'une quelconque des revendications 11 à 14, **caractérisée en ce que** la surface des grains comporte une couche de silice d'épaisseur inférieure à 2 nm.

## Claims

1. Process for preparing active silicon powder intended for the ROCHOW reaction consisting of grinding metallurgical silicon of composition (by weight):
Si>98%, Fe<0.4%, Al<0.2%, Ca<0.2%,
to a particle size distribution of less than 350µm, in the presence of at least one catalyst and/or promoter agent of the reaction, in such a way as to deposit this (or these) element(s) on the surface of the particles.

2. Process according to Claim 1, **characterised in that** copper is deposited at the surface of the particles in a quantity comprised between 0.01 and 0.1gm/m² of particle surface.

3. Process according to Claim 2, **characterised in that** copper oxide or chloride is added during the grinding of the silicon.

4. Process according to Claim 2, **characterised in that** the grinding is carried out in a rod mill or a ball mill, and that the rods or balls are made of a cuprous alloy.

5. Process according to any one of Claims 1 to 4, **characterised in that** tin is deposited at the surface of the particles in a quantity comprised between 0.003 and 0.03gm/m² of particle surface.

6. Process according to Claim 5, **characterised in that** tin oxide or chloride is added during the grinding of the silicon.

7. Process according to Claim 5, **characterised in that** the grinding is carried out in a rod mill or a ball mill, and that the rods or balls are made of bronze.

8. Process according to any one of Claims 1 to 7, **characterised in that** phosphorus is deposited on the surface of the particles in a quantity comprised between 0.003 and 0.03gm/m² of particle surface.

9. Process according to Claim 8, **characterised in that** ferrophosphorus is added during the grinding of the silicon.

10. Process according to Claim 8, **characterised in that** the grinding is carried out in a rod mill or a ball mill, and that the rods or balls are made of phosphor bronze.

11. Active silicon powder for the preparation of alkyl- or aryl-halogenosilanes of composition (by weight):
Si>98%, Fe<0.4%, Al<0.2%, Ca<0.2%,
with a particle size distribution of less than 350µm, comprising copper at the surface of the particles in a quantity comprised between 0.01 and 0.1gm/m² of particle surface.

12. Active silicon powder for the preparation of alkyl- or aryl-halogenosilanes of composition (by weight):
Si>98%, Fe<0.4%, Al<0.2%, Ca<0.2%,
with a particle size distribution of less than 350µm, comprising tin at the surface of the particles in a quantity comprised between 0.003 and 0.03gm/m² of particle surface.

13. Active silicon powder for the preparation of alkyl- or aryl-halogenosilanes of composition (by weight):
Si>98%, Fe<0.4%, Al<0.2%, Ca<0.2%,
with a particle size distribution of less than 350µm, comprising phosphorus at the surface of the particles in a quantity comprised between 0.003 and 0.03gm/m² of particle surface.

14. Silicon powder according to any one of Claims 11 to 13, **characterised in that** it comprises at the surface of the particles one or several other catalyst elements and/or promoters of the synthesis reaction.

15. Silicon powder according to any one of Claims 11 to 14, **characterised in that** the surface of the particles comprises a layer of silicon dioxide of thickness less than 2nm.

## Patentansprüche

1. Verfahren zur Herstellung aktiven Siliziumpulvers für die Rochow-Reaktion, bei dem metallurgisches Silizium der Zusammensetzung (in Masse):
Si>98% Fe<0,4% Al < 0,2 % Ca < 0,2 %
auf eine Korngröße kleiner 350 µm gemahlen wird, und zwar in Gegenwart mindestens eines Katalysators und/oder Promotors für die Reaktion, um dieses Element (oder diese Elemente) an der Kornoberfläche abzuscheiden.

2. Verfahren nach Anspruch 1, **dadurch gekennzeichnet, dass** an der Kornoberfläche Kupfer in einer Menge von 0,01 bis 0,1 g/m² Kornoberfläche abgeschieden wird.

3. Verfahren nach Anspruch 2, **dadurch gekennzeichnet, dass** beim Mahlen des Siliziums Kupferoxid oder -chlorid zugegeben wird.

4. Verfahren nach Anspruch 2, **dadurch gekennzeichnet, dass** das Mahlen in einer Stab- oder Kugelmühle erfolgt und die Stäbe oder Kugeln aus Kupferlegierung bestehen.

5. Verfahren nach einem der Ansprüche 1 bis 4, **dadurch gekennzeichnet, dass** an der Kornoberfläche Zinn in einer Menge von 0,003 bis 0,03 g/m² Kornoberfläche abgeschieden wird.

6. Verfahren nach Anspruch 5, **dadurch gekennzeichnet, dass** beim Mahlen des Siliziums Zinnoxid oder -chlorid zugegeben wird.

7. Verfahren nach Anspruch 5, **dadurch gekennzeichnet, dass** das Mahlen in einer Stab- oder Kugelmühle erfolgt und die Stäbe oder Kugeln aus Bronze bestehen.

8. Verfahren nach einem der Ansprüche 1 bis 7, **dadurch gekennzeichnet, dass** an der Kornoberfläche Phosphor in einer Menge von 0,003 bis 0,03 g/m² Komoberfläche abgeschieden wird.

9. Verfahren nach Anspruch 8, **dadurch gekennzeichnet, dass** beim Mahlen des Siliziums Ferrophosphor zugegeben wird.

10. Verfahren nach Anspruch 8, **dadurch gekennzeichnet, dass** das Mahlen in einer Stab- oder Kugelmühle erfolgt und die Stäbe oder Kugeln aus Phosphorbronze bestehen.

11. Aktives Siliziumpulver für die Herstellung von Alkyl- oder Aryl-Halogensilanen der Zusammensetzung (in Masse):
Si>98% Fe<0,4% Al<0,2% Ca<0,2%
mit einer Korngröße kleiner 350 µm, das an der Kornoberfläche Kupfer in einer Menge von 0,01 bis 0,1 g/m² Komoberfläche aufweist.

12. Aktives Siliziumpulver für die Herstellung von Alkyl- oder Aryl-Halogensilanen der Zusammensetzung (in Masse):
Si>98% Fe<0,4% Al<0,2% Ca<0,2%
mit einer Korngröße kleiner 350 µm, das an der Kornoberfläche Zinn in einer Menge von 0,003 bis 0,03 g/m² Kornoberfläche aufweist.

13. Aktives Siliziumpulver für die Herstellung von Alkyl- oder Aryl-Halogensilanen der Zusammensetzung (in Masse):
Si>98% Fe<0,4% Al<0,2% Ca<0,2%
mit einer Korngröße kleiner 350 µm, das an der Kornoberfläche Phosphor in einer Menge von 0,003 bis 0,03 g/m² Kornoberfläche aufweist.

14. Siliziumpulver nach einem der Ansprüche 11 bis 13, **dadurch gekennzeichnet, dass** es an der Kornoberfläche ein oder mehrere weitere Katalysator- und/oder Promotorelemente für die Synthesereaktion aufweist.

15. Siliziumpulver nach einem der Ansprüche 11 bis 14, **dadurch gekennzeichnet, dass** die Kornoberfläche eine Kieselsäureschicht von weniger als 2 nm Dicke aufweist.
